# EUROPEAN PATENT APPLICATION

(11) **EP 1 843 258 A1**
(43) Date of publication of application: **10.10.2007**
(21) Application number: 06270038.0
(22) Date of filing: 06.04.2006
(51) Int. Cl.: G06F 17/30

(54) **Modeling data from disparate data sources**

(71) Applicant: Microsoft Corporation, Redmond WA 98052 (US)
(72) Inventor: Gatta, Marie-Christine, Eur. Product Dev. Centre, 18, Dublin (IE); Brandel, Jonas, Eur. Product Dev. Centre (EPDC), 18, Dublin (IE)
(74) Representative: Free, Rachel Alder

(57) **Abstract**

Disparate data sources that are, for example, physically separated, and of different types, often comprise redundant and inconsistent data across those data sources. This is problematic when it is required to use and or manage the data across the data sources in an effective and simple manner. In addition, it can be difficult to find out what data is available and to do this quickly and effectively. To address these problems a method of modelling information cross-datasource is described which uses a vertex-edge graph structure. Master vertices in the graph uniquely represent entities in the information system and this reduces redundancy. Declined vertices are linked to master vertices and are related to different ones of the disparate data sources. Fields are represented (uniquely to reduce redundancy) at the vertices and corresponding fields are linked to reduce and/or avoid data inconsistencies.

## Description

### COPYRIGHT NOTICE

A portion of the disclosure of this patent contains material which is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### TECHNICAL FIELD

This description relates generally to modelling information stored at a plurality of disparate data sources. It also relates to methods of accessing information from such disparate data sources using models.

### BACKGROUND

Corporate and other information systems typically comprise a plurality of disparate data sources such as web servers with web-based documents, databases and other stores of files or other data. These disparate data sources, as well as being physically separated, and of different types, often comprise redundant and inconsistent data across those data sources. This is problematic when it is required to use and or manage the data across the data sources in an effective and simple manner.

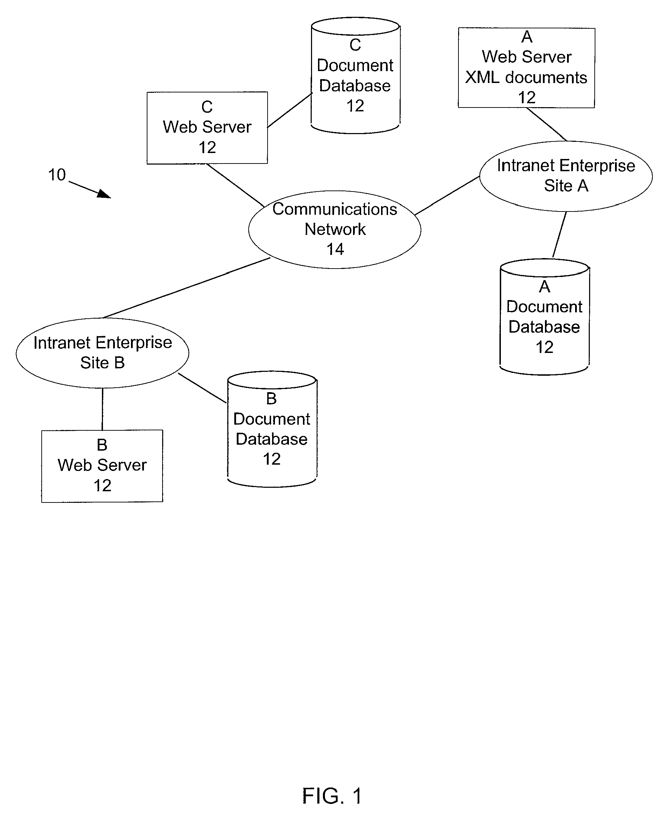

For example, FIG. 1 is a schematic diagram of an information system 10 comprising a plurality of data sources 12. The term "data source (DS)" is used herein to refer to any organized container or store of data or any source of data that is exposed in an organised manner. For example, in FIG. 1, examples of data sources include web servers and document databases. The databases may be relational. It would also be possible for one of the data sources to comprise a search engine or other interface to a data store. The search engine allows the data to be accessed in an organised way. The data sources are disparate in the sense that they are physically separate and/or of different types. In the example illustrated, an intranet at enterprise site A has a document database A and a webserver A having XML documents. Suppose this intranet site is physically located in Dublin, Ireland and the documents at the database A and webserver A are intended for use by English language users. Another intranet at enterprise site B also has a webserver B and a document database B storing documents using the French language. The intranets at sites A and B are connected via any suitable communications network 14 for example and data sources C are connected to that network 14. Many other data sources can be provided in the information system 10 and can be connected via any suitable types and arrangements of communications networks.

One problem with existing information systems involves inconsistency of information. For example, the same entity may be referred to by different data in different data sources. Suppose that document database A uses the word "French" to refer to the French language, whereas document database B uses the term "FRA" to refer to the French language. Because different data is used to refer to a common entity there is an inconsistency. Inconsistency can also arise where the same data is used to refer to different entities. For example, suppose that the term "Type 1" is used in webserver B to refer to email information whereas in webserver A "Type 1 " is used to refer to spreadsheet files.

Another problem with existing information systems involves redundancy. That is, information stored at one data source 12 in an information system 10 may be duplicated at another data source 12 in the same information system. In general we aim to reduce redundancy and to re-use information as far as possible to avoid redundancy.

Given an information system (such as that of FIG. 1) with a plurality of disparate data sources having at least some common information, resources seeking to use that information system in an efficient manner face a number of challenges. Data needs to be found and accessed in a simple and effective manner which takes account of any inconsistencies. In addition, redundancy should be reduced or avoided. For example, when creating new software tools or systems which use data from the information system 10 we do not want to create other data sources; instead we prefer to re-use the existing data from the existing data sources. Previously this has not always been the case. Typically, software developers have created bespoke data sources for their own applications because by doing so great control over consistency and access to that information can be exercised. By recreating the data locally in a new data source software developers have been able to have a clear idea of how to locate and access required information necessary for the application. However, such an approach leads to unnecessary duplication of information and as the number of data sources increases, problems of complexity, inconsistency and redundancy increase.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Disparate data sources that are, for example, physically separated, and of different types, often comprise redundant and inconsistent data across those data sources. This is problematic when it is required to use and or manage the data across the data sources in an effective and simple manner. In addition, it can be difficult to find out what data is available and to do this quickly and effectively. To address these problems a method of modelling information cross-datasource is described which uses a vertex-edge graph structure. Master vertices in the graph uniquely represent entities in the information system and this reduces redundancy. Declined vertices are linked to master vertices and are related to different ones of the disparate data sources. Fields are represented (uniquely to reduce redundancy) at the vertices and corresponding fields are linked to reduce and/or avoid data inconsistencies.

The term "declension" is used herein to refer to an inflection of a graph vertex according to association or "belonging" with a particular data source. One key part of our solution is to model the static or dynamic graph in a corresponding representation in XML using our concept of declension. This helps to build master information that is always correct cross-data source and then to access the particular information according to a chosen declension.

The present example provides a method of generating a model of information stored at a plurality of disparate data sources in an information system, the information comprising at least some data common between two or more of the data sources said method comprising:
- for each data source, accessing at least one schema describing how data is stored at that data source, said schema comprising a vertex-edge graph where each vertex is a master vertex uniquely representing an entity of the information system; and
- (ii) forming a static graph representing all the accessed schemas by adding declined vertices to the skeleton graph, declined vertices representing instances of the master vertices.

This provides the advantage that the model can be used to quickly and easily locate information in the system even though that comprises many disparate data sources. In this way it is not necessary to create an additional bespoke data source for a new application; rather, the model can be used to enable simple re-use of the existing data sources. This helps to reduce redundancy. In addition, because the master vertices uniquely represent entities of the information system redundancy is again reduced. Duplication of master vertices is avoided. The static graph that is formed advantageously represents all the accessed schemas. This static graph is also referred to as an "empty view graph" because it does not contain actual data from the data sources. Instead it provides information about the schema of the data such as how that data is stored, organised and represented at the various data sources.

Another example provides a model of information stored at a plurality of disparate data sources in an information system, the information comprising at least some data common between two or more of the data sources, the model comprising a static graph comprising: a vertex-edge graph having:
- a plurality of master vertices each uniquely representing an entity of the information system; and
- a plurality of declined vertices representing instances of the master vertices.

Preferably the step of forming the skeleton graph comprises linking the master vertices using first edges which comprise labels indicating the presence of any joined information between master vertices. This provides the advantage that inner joins and other joins between master vertices can be simply and effectively represented. Thus a user of the model can later easily determine where to access required data from in the information system.

Preferably a plurality of declined vertices are linked to a particular master node using second edges, each of those declined vertices being related to a different one of the disparate data sources. This provides the advantage that declined vertices simply and effectively represent information from a particular data source.

Preferably the method further comprises, at the master and declined vertices, uniquely representing fields that can be retrieved from the data sources. Because the representation is unique this reduces redundancy.

Advantageously, third edges are used to link field representations at master vertices to corresponding field representations at declined vertices. This is also referred to herein as data mapping and it provides the advantage that data inconsistencies are reduced.

Preferably the method comprises representing any or all of the schemas, skeleton graph and static graph using XML (extensible mark-up language). This is advantageous because XML uses a node and attribute based structure which lends itself well to the tasks described herein.

Preferably the method comprises creating a dynamic graph from the static graph in which at least some data from the information system is represented.

Preferably the dynamic graph is formed using an "adjacency model". This provides the advantage that redundancy is reduced.

Another example provides a method of accessing information from an information system comprising a plurality of disparate data sources, the information comprising at least some data common between two or more of the data sources, said method comprising:
- accessing a model as described above; and
- forming a query to access the information on the basis of the model.

Another example provides a computer program comprising computer program code means adapted to perform all the steps of any of the methods described herein when said program is run on a computer. Preferably the computer program is embodied on a computer readable medium.

Another example provides an apparatus for generating a model of information stored at a plurality of disparate data sources in an information system, the information comprising at least some data common between two or more of the data sources said apparatus comprising:
- means for accessing, for each data source, at least one schema describing how data is stored at that data source, said schema comprising a vertex-edge graph where each vertex is a master vertex uniquely representing an entity of the information system; and
- a processor arranged to form a static graph representing all the accessed schemas by adding declined vertices to the skeleton graph, declined vertices representing instances of the master vertices.

The methods may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of an information system;
FIG. 2 is a schematic diagram of an information system indicating how a cross-data source representation is used;
FIG. 3 shows part of the information system of FIG. 2 in more detail;
FIG. 4 is a flow diagram of a method of creating a static and dynamic graph for a cross-data source representation;
FIG. 5 is a flow diagram of a method of using a static and a dynamic graph to access information from an information system;
FIG. 6 is a flow diagram of a method of forming a skeleton graph;
FIG. 7 is a flow diagram of a method of forming a static graph;
FIG. 8 is an example of part of a schema for a data source;
FIG. 9 is an example of a skeleton graph;
FIG. 10 is an example of part of a static graph;
FIG. 1 1 is another example of a static graph.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

As mentioned above, information systems, such as that shown in FIG. 1, typically have a plurality of disparate data sources having at least some information in common. Resources using such information systems in an efficient manner need to know where and how to access data they require and how to avoid inconsistencies in that data. We recognize a need to provide one or all of the following features:
- Maintain the data in all data sources
- Ensure consistency between one data source and another for related data
- Optimize access to data cross-data sources
- Enable cross-data source applications to be built
- Represent the data in a simple and clear schema
- increment the data without breaking consistency
- Build a concept of master data.

Our solution involves uniquely representing the same data cross datasource in such a way as to eliminate inconsistencies. We develop a model using a graphical representation of the data which highlights information that is common between two or more data sources. The model preferably uses a classical non-directed graph comprising vertices and edges. Preferably the model comprises two representations of the graph, one representing the data at static time and one at run time. At static time, the data is not required but a schema of the data is required, for example, to develop a new software tool that will use the information system. At run time the data is required, for example when running a software tool that uses the information system.

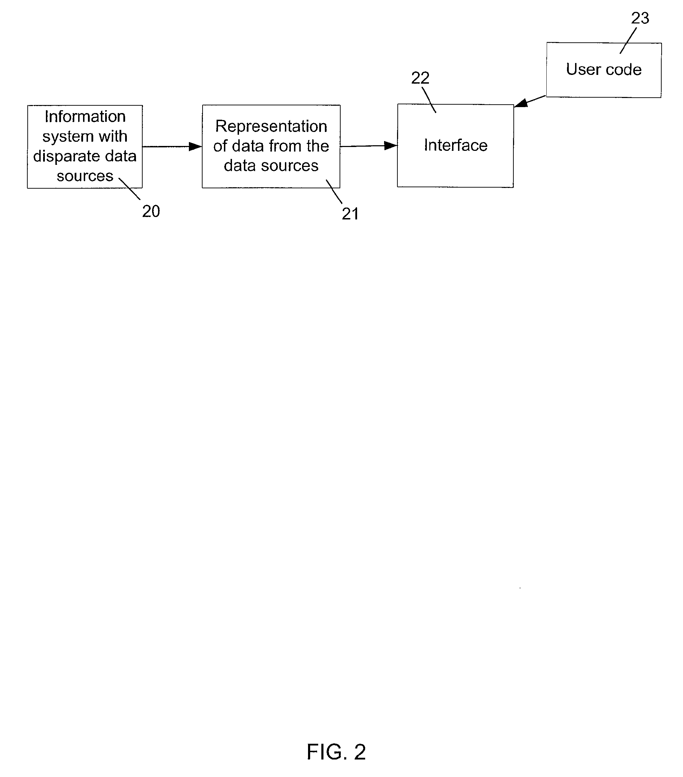

FIG. 2 is a schematic diagram of an information system illustrating how our cross-data source representation is used. Data from an information system 20 having a plurality of disparate data sources is represented using representation 21. An interface 22 such as an application programming interface (API) or any other suitable interface is provided to the representation 21 which enables user code 23 to access data from the information system 20.

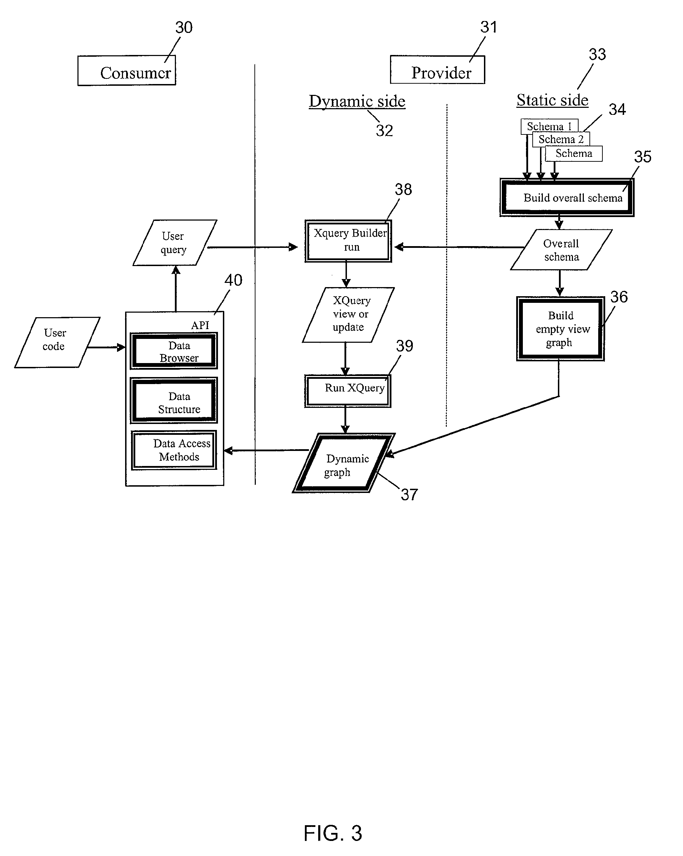

FIG. 3 shows part of the information system of FIG. 2 in more detail. The interface 22 and user code 23 of FIG. 2 are illustrated as a consumer side 30 of a platform and the representation 21 of FIG. 2 is illustrated in a provider side 31 of the platform. The provider side 31 itself comprises two parts: a dynamic side 32 comprising a representation of the data at dynamic time and a static side 33 comprising a representation of the data at static time.

At the static side 33 schemas are accessed about the individual data sources and an overall schema 35 (also referred to as a skeleton graph) is formed. The skeleton graph is then used to form an empty view graph 36 which is also referred to as a static graph. The static graph is in turn used to form a dynamic graph 37. These processes are described in more detail below.

At the dynamic side 32, information from the static side 33 provided by the static graph is used to form queries using a query builder process 38. The queries formed in this way are run 39 on the dynamic graph 37 to produce output data which can be accessed by a consumer at the consumer side 30. Any suitable methods can be used at the consumer side 30 as known in the art. The API 40 illustrated in FIG. 3 is simply one possible example.

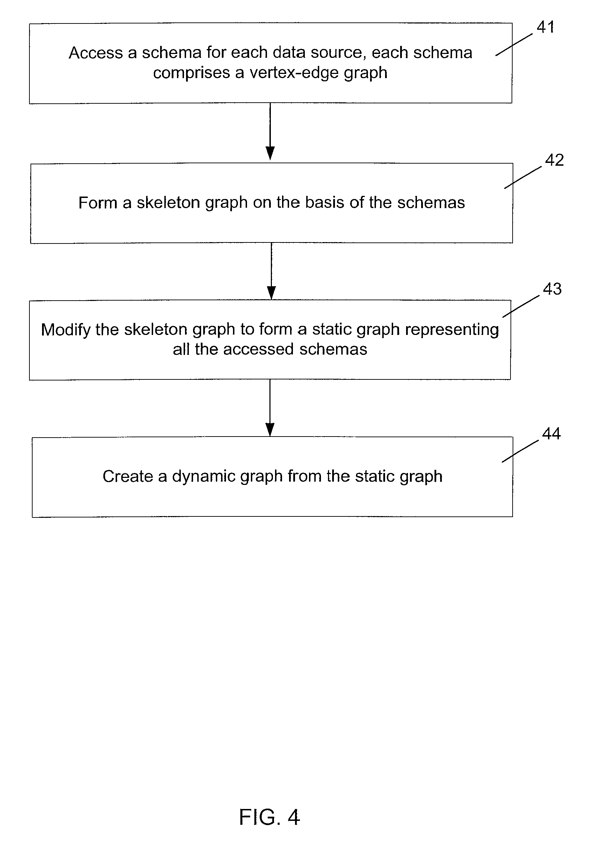

With reference to FIG. 4 the static side 33 (FIG. 3) process is now described in more detail. A schema is accessed for each data source, each schema comprising a vertex-edge graph (see box 41 of FIG. 4). A skeleton graph is formed on the basis of the schemas (see box 42) and this skeleton graph is modified to form a static graph representing all the accessed schemas (see box 43). A dynamic graph can then be formed from the static graph (see box 44) when required.

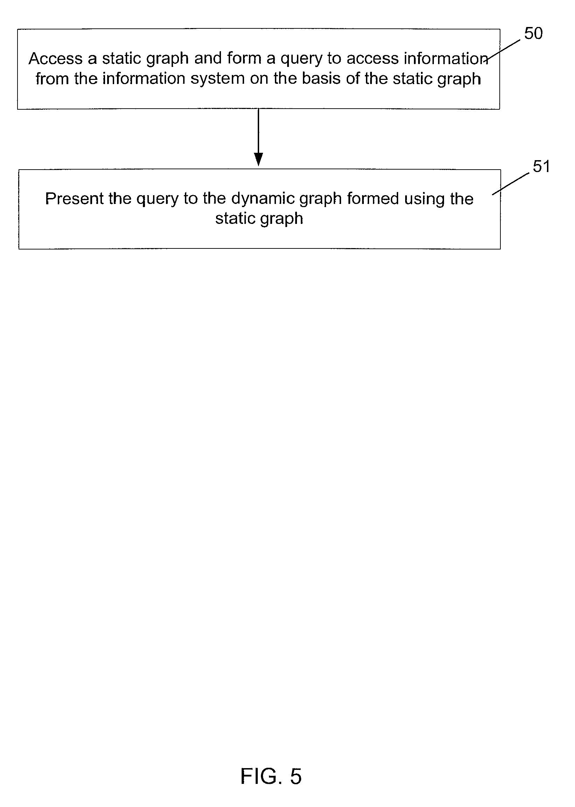

FIG. 5 describes how the static graph can be accessed and used to form a query to access information from the information system (see box 50). The query is presented to a dynamic graph formed using the static graph (see box 51) in order to provide data to a consumer at the consumer side 30 (see FIG. 3).

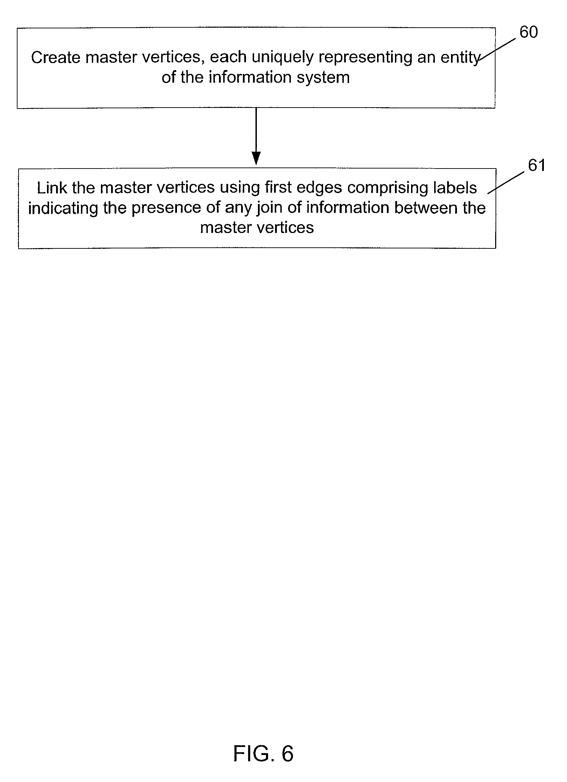

FIG. 6 is a flow diagram of the process of creating the skeleton graph. Master vertices are created, each uniquely representing an entity of the information system (see box 60). By using unique master vertices in this way redundancy is reduced. For example, an entity such as a table of information about software applications might exist at two or more of the data sources. In that case only one master vertex representing a table of information about software applications would be created. The master vertices are connected using first edges that have labels indicating the presence of any join of information between master vertices (see box 61). The first edge between two master vertices will tell the user that a query can be used to combine records from the two elements represented by the master vertices the edge is connecting together. Combining records in this way is referred to as a 'join'.

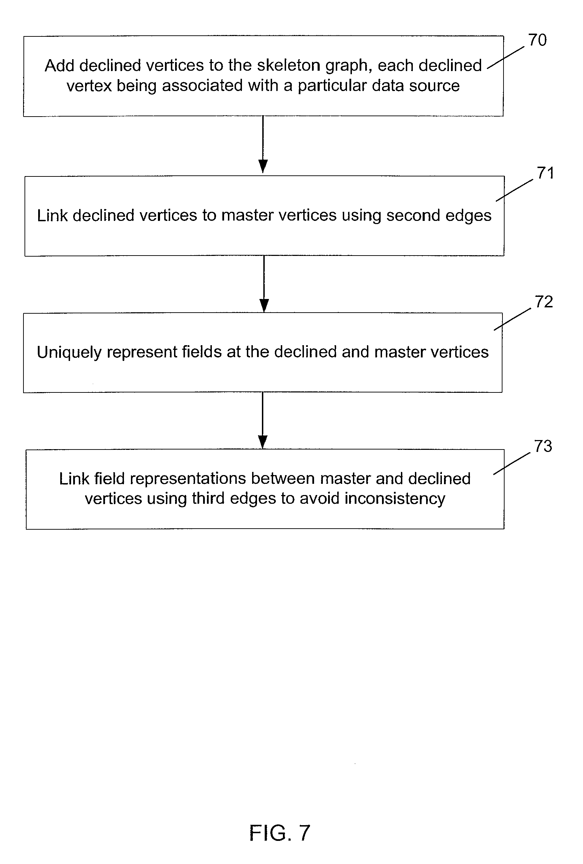

FIG. 7 gives more detail of the process for forming a static graph. Declined vertices are added to the skeleton graph. Each declined vertex is associated with a particular data source (see box 70). The declined vertices are connected to master vertices using second edges (see box 71) and fields are uniquely represented at the declined and master vertices (see box 72). By uniquely representing fields in this way redundancy is reduced. The field representations are linked between master and declined vertices using third edges and this enables data inconsistencies to be avoided or alleviated (see box 73).

More detail about the processes described with reference to FIGs. 4 to 7 are now given with reference to a particular example. In this example three data sources are given namely CMSx, Wordcounts, and Filelist. Many more than three data sources can be used but for clarity three are given in the example.

For the purposes of the example a sample of data taken from our data source CMSX and another sample of data taken from our database Wordcounts is now given. Our data source FILELIST is also mentioned herein and this comprises a table called Application.

### Data source: CMSx

### Schema:

**Table: Application**

| | |
|---|---|
| Field: | ID |
| Field: | Name |
| Field: | Shortname |
| Field: | Contact |
| Field: | Group |

**Table: Component**

| | |
|---|---|
| Field: | ID |
| Field: | Name |
| Field: | App_ID |
| Field: | GUID |

**Table: File**

| | |
|---|---|
| Field: | ID |
| Field: | Name |
| Field: | Comp_ID |
| Field: | Version |
| Field: | Size |

### Data:

**Application**

| ID | **Name** | **Shortname** | Contact | Group |
|---|---|---|---|---|
| 1 | Access | ACC | John | X |
| 2 | Word | WRD | Tony | Y |
| 3 | Excel | XL | Helen | Z |

**Component**

| ID | Name | Shortname | App_ID |
|---|---|---|---|
| 1 | MainDll | Main | 1 |
| 2 | Wizard | Wiz | 1 |

**File**

| ID | **Name** | Comp_id | Version | Size |
|---|---|---|---|---|
| 1 | Accmain.dll | 1 | 11.2 | 235009 |
| 2 | Acwiz.dll | 2 | 11.34 | 16790 |

### Data source: Wordcounts

### Schema:

**Table: Application**

| | |
|---|---|
| Field: | ID |
| Field: | AppName |
| Field: | TLA |

**Table: File**

| | |
|---|---|
| Field: | ID |
| Field: | FileName |
| Field: | ApplD |
| Field: | Version |
| Field: | EDB |

### Data:

**Application**

| ID | **AppName** | **TLA** |
|---|---|---|
| 1 | Access | ACC |
| 2 | Word | WRD |
| 3 | Excel | XLS |

**File**

| ID | **Name** | ApplD | Version | EDB |
|---|---|---|---|---|
| 1 | Accmain11.dll | 1 | 11.2 | Accmain11.edb |
| 2 | Acwiz11.dll | 2 | 11.34 | Acwiz11.edb |

Both samples contain data about applications and files. However, the field names of the tables in two samples are different. In the sample from CMSX these are "Name", "Shortname" and "Name" whereas in the sample from Wordcounts these are "AppName", "TLA" and "Name". Here the same entities are being referred to but different data is being used. In addition, the content of the fields in the tables of the two samples is different although it should be the same when it refers to the same entity. Thus in sample CMSX field names ACC Accmain.d11 and Acwiz.dll refer to the same entities as field names "ACCESS", "Accmain11.dll" and "Acwiz11.dll" in sample wordcounts. These are inconsistencies of data semantically equal but syntactically different. Such inconsistencies cause problems when it is required to query the data or build applications that need to obtain joined information from those fields. This can be addressed (for example to make ACC and ACCESS be the same for a consumer of the dynamic graph and data) by extending our model using mapping functionality components to translate from one syntactic representation to another (master) representation.

### Individual Schemas

As mentioned above with reference to FiGs. 3 and 4 a schema is accessed for each data source. Our system does not need to know the complete schema but only a partial one which represents the data it is required to expose to consumers at the consumer side 30 (see FIG. 3).

The individual schemas comprise vertex-edge graphs where
- The Vertex is an entity with three attributes that represent:
   1. the ID
   2. the name of the vertex
   3. the content of the vertex
- The Edge is represented by an arrow and a label that defines the link type between the vertices.

In our particular example mentioned above, the vertices represent the tables, and the edges the relationships between them. The vertex's ID are that of the table, the vertex name is the name of the table according to the datasource it belongs to, and the content of the vertex is the names of the fields we want to use.

The relationship between the tables appears on the edge that links the two vertices.

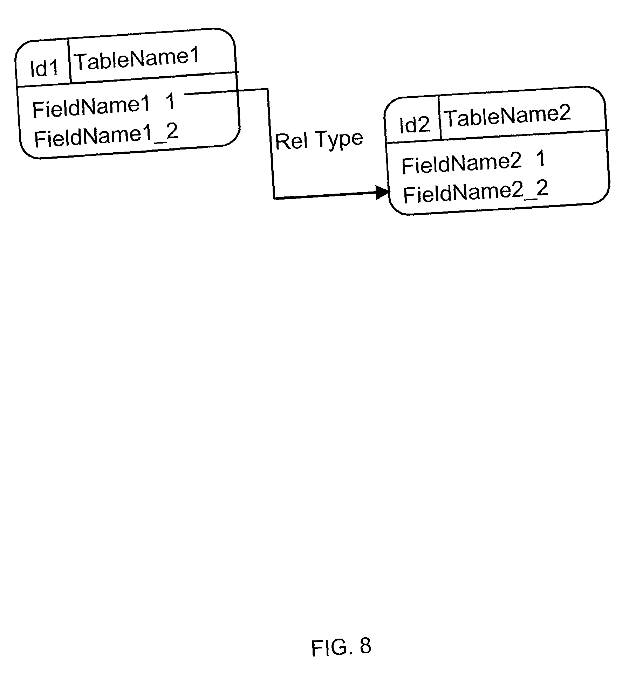

FIG. 8 is an example of the representation.

Preferably we use XML (extensible mark-up language) to specify the individual schemas.

### XML for the graph of individual schema

- Each table is represented by a *Node* element in the graph XML, with id and (table) name attributes
- Each field of each table is a sub-element of its table node
- Each relation between tables is represented by an *Edge* element
- Each relation type of a relation is an attribute of its *Edge* element

Below is the XML representation of the graph of FIG. 8:

```
 <graph id="graph_1" Name="Example">
 <node id="id1" " Name="TableNamel ">
       <Field name="FieldName 1_1 ">
       <Field name="FieldName1_2">
 </node>
 <node id="id1" Name="TabIeName1">
       <Field name="FieldName1 _1 ">
       <Field name="FieldName1_2">
 </node>
 <EDGE Begin="Id1" End="Id2">
              <ATTR Name ="FieldBegin" Value = "FieldName1_1"/>
              <ATTR Name ="FieldEnd" Value = "FieldName2_2"/>
              <ATTR Name="REL" Value="Rel Type"/>
 </EDGE>
 </graph>
```

When the user integrates a new datasource to the platform, the first thing to do is describe the individual schema of the datasource as explained above. This could be a relational or a hierarchical datasource. In the latter case, the user will have to assess the relational translation of the hierarchical schema to obtain a relational schema.

Once the user has a clear representation of the schema, the individual graph can be represented and translated to XML.

### Skeleton Graph

The skeleton is a graph, not oriented, with unique Vertices and Edges representing the nodes described in the individual schemas. Since we have several datasources and since we can have a node in one datasource equal to a node in another datasource, we will eliminate the duplication of nodes by drawing only one "master" vertex representing that node.

In the particular example under discussion, the node Application appears three times in our datasources: once in CMSx, once in Wordcount, once in Filelist. The Skeleton graph will thus have this node represented in a unique "Application" vertex.

Each vertex is a SEMANTIC representation of the node. In effect, "Application" in CMSx could be "Product" in Filelist, but it would be represented with the same vertex in the skeleton as both represent the same concept. Because of this, it has a unique identifier within the skeleton.

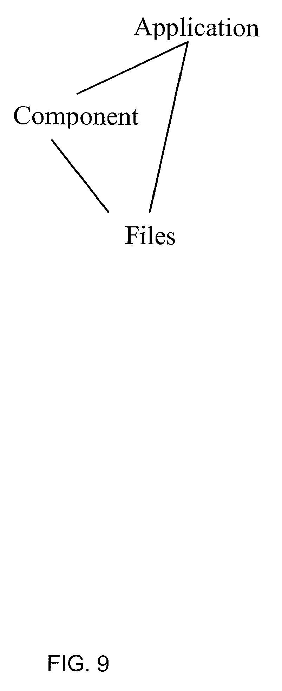

In the particular example under discussion, we would represent the Application and File tables only once in the skeleton and would obtain a skeleton graph as shown in FIG. 9.

### Static Graph

The static graph is an extension of the Skeleton. It is a graph that represent all the schemas of all the datasources and is organised in "master nodes" and "Declined nodes". The "master nodes" are the vertices from the skeleton and the "Declined nodes" are the vertices representing the instances of the master nodes. It is called "Static Graph" as it contains only the structure of the data or schema representation, it does not contain any data.

The static graph is used to help the user understand how the data of the overall system is organised and how to access it quickly and easily. Also, it is an input in the method to build the correct query that retrieves the data requested by the user code. The term "navigator" is used to refer to the user interface (Ul) of the Static graph that the user can use to traverse it.

### Static Graph features:

- From the Skeleton graph, the Static graph gets the unique vertices called "Master Nodes". They represent the information the user should know as unique. For example, the APPLICATION node appears in several datasources and in all of them, has the same semantic concept. That means it is a Master Node.
- The user, traversing the Static graph, can decline the nodes in different states that represent the particular accesses to the datasource. For example: Imagine that APPLICATION is defined and used in three different datasources: CMSx, Filelist and Wordcount. Then, the APPLICATION node can be declined in three different states, one from CMSx, one from Filelist, one from Wordcount. From the navigator, the user can then choose the origin of the data he wants to see. We call *Declension* the particular value's description from a datasource. One could also see this as the static graph nodes being the abstract (class) representation, and the declinations are inherited (class) implementation and/or instantiated (objects).
   - For example: Application.declension=CMSx means the data will come from that datasource. Since the user does not necessary know the names of datasource, the navigator should present some static variables that represent these datasource (CMSx, WDCT, FILELT, etc...).
- The user, through the Static graph, sees the entry points and navigations of the system (APPLICATION, COMPONENTS, LANGUAGES, FEATURES, DIALOGS, STRINGS, BUGS, SCHEDULES, FILESET, SHARES, DEPOTS, BUILDS, TEST CASES, EOL, TRIAGE, SIGN-OFF, etc...). Let's call these *Nodes.*
- The attributes of the *Nodes:* the user, navigating the Static graph, can stipulate the fields to retrieve from a particular datasource. Note that since the user does not need to know about a datasource schema, the Static graph maps the fields in a unique way (like it does with the nodes). For example: In CMSx the Application Name field is called "Name", in Filelist it is called "AppName", in Wordcount it is called "ApplicationName". The Static graph represents these in a unique and single manner.
- The different *declensions* of a node and attributes are available to the user, but used in a transparent way: the user will always use the same Node name and the same Attribute to access the data from a different declension. Only the value of the declension changes.
- The Static graph does not need to contain all the tables / fields of the datasource object, but it can (Tables for DB, Nodes for XML, Folder for Shares, etc...).. This subset can be common to all or to a subset of the datasource. As such, the field description in the Static graph preferably contains the *Declension* attribute as well.
   - For example: The Component table in CMS has a field called "GUID" which does not exist in the Filelist Component table. To access a GUID value on a component, the platform WILL HAVE to go to the CMS datasource then.
      This needs to be specified somewhere: in the Static graph XML.

### Static Graph representation

The graph is another classical Vertex / Edge graph where there are two kinds of vertices:
1. the MASTER VERTEX
   - The ID represents a unique identifier of the master node
   - The Name of the vertex (usually the name is the known name for accessing the entity represented, for example: APPLICATION)
   - The content of the vertex is made up by the fields, like in the individual schema.
   - The Edge is represented by an arrow and a label that defines the link type between the Vertices.
2. the DECLINED VERTEX
   - The ID represents a unique identifier of the declined node based on the Master ID
   - The Name of the vertex (usually the same as the Master name)
   - The content of the vertex is made up by the fields, like in the individual schema.
   - The Edge is represented by an arrow and a label that defines the declension type between the Vertices (the name of the datasource the declension is based on for example).

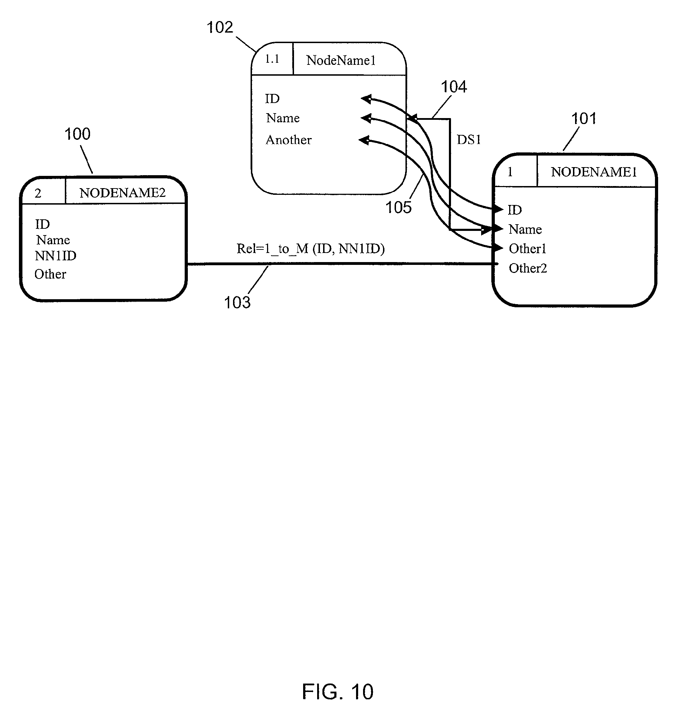

FIG. 10 gives an example of the representation. It shows part of a static graph with two master vertices 100, 101 and a declined vertex 102. The master vertices are linked by a first edge 103 and the declined vertex is linked by a second edge 104 to its associated master vertex. A third type of edge 105 is shown between field representations in the master and declined vertices.

An explanation of the graph of FIG. 10 is now given:

NODENAME1 vertex: The vertex has an identifier (1) and a name (NODENAME1). Then there are 4 FIELD attributes: ID, Name, Other1 and Other2. These are defined when the individual datasource Schema is created and integrated to the platform. Then there is one replica of the Node NODENAME1 called NodeName 1. This is the Declined Vertex of the Node NODENAME1 on the Data Source DS1. The declensions define which field comes from which datasource and its mapping to the datasource using the third edges 105 as mentioned above. This is referred to herein as data mapping.

The EDGE: the edge between the NODENAME1 vertex and the NODENAME2 vertex shows that there is a relation between these two Nodes. This means that from a query, it will be possible to do an inner join between the two tables these two nodes represent, for example: if A is a Node and B is another Node, and A relates to B on fields x and Y respectively then you can represent this in a query as an inner join as follows:
select * from A inner join B on A.x = B.y

### Static Graph XML

- Each Master node is a *Node* of the graph with
   i. an ID and a Name attribute
   ii. a Declension tag element with
      1. an ID attribute that represents the id of the declension
      2. a Graph attribute that contains the name of the individual graph XML
- Each field of each Master Node is a tag element of its Master node with
   i. A Name attribute
   ii. A Declension tag element with
      1. an ID attribute that represents the id of the declension
      2. a Value attribute that contains the name of the corresponding field in the declined node
- Each relation between tables is an *Edge* node
- Each relation type of a relation is an attribute of its *Edge* node

The XML of the example graph of FIG. 10 is now given.

If the XML of the individual schema for the datasource has been defined (Graph_1), then we start by defining the Node NODENAME1 and its declension to the datasource DS1 (second edges):

```
       <NODE ID=1 NAME=" NODENAME1 ">
             <DECLENSION ID=X1 GRAPH=" Graph _1"/>
```

Then we need to define the fields in the Node NODENAME1 and their respective declensions as well (third edges):

```
             < FIELD NAME=" ID" >
                     <DECLENSION ID=X1.1 VALUE="ID"/>
             </ FIELD>
             < FIELD NAME=" Name" >
                     <DECLENSION ID=X1.2 VALUE="Name"/>
             </ FIELD>
             < FIELD NAME=" Other1" >
                     <DECLENSION ID=X1.3 VALUE="Another"/>
             </ FIELD>
             < FIELD NAME=" Other2">
             </ FIELD>
       </NODE>
```

Then we do the same with NODENAME2 Node:

```
       <NODE ID=1 NAME=" NODENAME2">
             <DECLENSION ID=Y1 GRAPH=" Graph _1"/>
             < FIELD NAME=" ID" >
             </ FIELD>
             < FIELD NAME=" Name" >
             </ FIELD >
             < FIELD NAME=" NN1 ID" >
             </ FIELD>
             < FIELD NAME=" Other">
             </ FIELD>
       </NODE>
```

Then the relation between NODENAME1 and NODENAME2 is defined by an Edge node in the XML: <EDGE Begin="1" End="2"> <ATTR Name ="FieldBegin" Value = "ID"/> <ATTR Name ="FieldEnd" Value = "NN1ID"/> <ATTR Name="REL" Value="1_TO_M"/> </EDGE>

### Concrete example of Static Graph and XML

Now let's represent the APPLICATION and COMPONENT node of our Application / Component / File example, adding a third datasource called Filelist with the following definition:
Datasource: Filelist
Schema:

**Table: Application**

| | |
|---|---|
| Field: | ID |
| Field: | ApplicationName |
| Field: | AppGroup |

**Table: Component**

| | |
|---|---|
| Field: | ID |
| Field: | Name |
| Field: | CompGroup |
| Field: | App_ID |

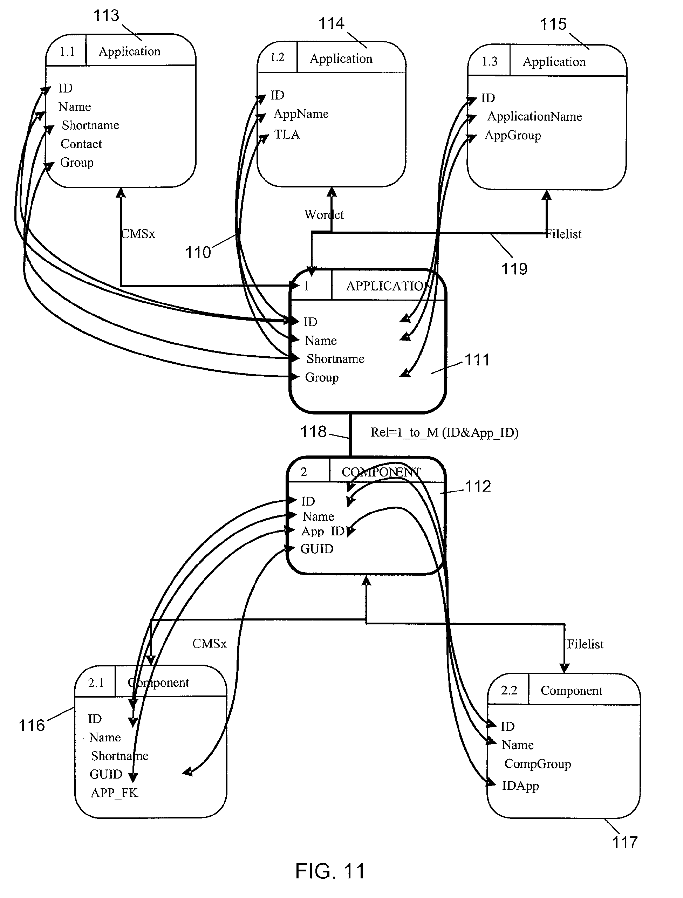

The static Graph is shown in FIG. 11. It comprises master vertices 111, 112 and declined vertices 113 to 117. The master vertices are connected by a first edge 118 which has a label indicating an inner join in respect of the ID and Name fields of those vertices. The master vertex 111 for application tables has three declined vertices 113, 114, 115 one for each datasource and second edges 119 are used for these connections between the master vertex 111 and its declined vertices. Third edges 110 are used to connect fields in master vertices to corresponding fields in declined vertices.

In the example of FIG. 1 1 the FIELDs "Group" and "Shortname" are used only by 2 datasources out of 3 (WORDCT does not have it). This means that accessing the data of wordcount through the Platform can be enriched by the values of the field from other datasource if the user wants to.
- The declension connectors show that APPLICATION is in many datasources, so you can join the values.
- The third edges, connections 110 show that APPLICATION Attributes relate to Application in each datasource on some fields and that you can use the Attribute on the Node Application as if each of them were in each datasource. So we clearly see here one example of incrementing the data available.

And the xml representation:

Suppose that the graph for the three datasources has been defined (Graph _1 , Graph _2, Graph _3 for CMS, WORDCT, FILELIST respectively). We start by defining the Node APPLICATION and its declensions to these 3 datasources:

```
       <NODE ID=1 NAME="APPLICATION">
             <DECLENSION ID=X1 Graph=" Graph _1"/>
```

<DECLENSION ID=X2 Graph =" Graph _2"/>

<DECLENSION ID=X3 Graph =" Graph _3"/>

Then we define the fields in the Node APPLICATION and their respective declensions:

```
             < FIELD NAME=" ID" >
                     <DECLENSION ID=X1.1 VALUE="ID"/>
                     <DECLENSION ID=X2.1 VALUE="ID"/>
                     <DECLENSION ID=X3.1 VALUE="ID"/>
             </ FIELD >
             < FIELD NAME=" Name">
                     <DECLENSION ID=X1.2 VALUE="Name"/>
                     <DECLENSION ID=X2.2 VALUE="AppName"/>
                     <DECLENSION ID=X3.2 VALUE="ApplicationName"/>
             </ FIELD >
             < FIELD NAME=" ShortName">
                     <DECLENSION ID=X1.3 VALUE="Shortname"/>
                     <DECLENSION ID=X2.3 VALUE="TLA"/>
             </ FIELD >
             < FIELD NAME=" Group">
                     <DECLENSION ID=X1.4 VALUE="Group"/>
                     <DECLENSION ID=X3.4 VALUE="AppGroup"/>
             </ FIELD >
       </NODE>
```

Then we do the same with COMPONENT Node:

```
       <NODE ID=2 NAME=" COMPONENT">
             <DECLENSION ID=Y1 GXL="Graph_1"/>
             <DECLENSION ID=Y3 GXL="Graph_3"/>
             < FIELD NAME=" ID">
                     <DECLENSION ID=Y1.1 VALUE="ID"/>
                     <DECLENSION ID=Y3.1 VALUE="ID"/>
             </ FIELD >
             < FIELD NAME=" Name" >
                     <DECLENSION ID=Y1.2 VALUE="Name"/>
                     <DECLENSION ID=Y3.2 VALUE="Name"/>
             </ FIELD >
             < FIELD NAME=" APP_ID">
                     <DECLENSION ID=Y1.3 VALUE="APP_FK"/>
                     <DECLENSION ID=Y3.3 VALUE="IDApp"/>
             </ FIELD>
             < FIELD NAME=" GUID">
                     <DECLENSION ID=Y1.4 VALUE="GUID"/>
             </ FIELD >
       </NODE>
```

Then the relation between APPLICATION and COMPONENT

```
       <EDGE Begin="1" End="2">
             <ATTR Name ="FieldBegin" Value = "ID"/>
             <ATTR Name ="FieldEnd" Value = "APPID"/>
             <ATTR Name="REL" Value="1_TO_M"/>
       </EDGE>
```

### Dynamic Graph

The dynamic graph can be formed in any suitable manner as known in the art. For example, by exposing the XML or other representation of the static graph to users who can use that to form queries. Another option is to use an adjacency model to reduce redundancy by only loading into memory the data that is required. A suitable adjacency model is described in "MODELING RELATIONAL DATA BY THE ADJACENCY MODEL" Jari Töyli, Matti Linna, Merja Wanne Department of Information Technology and Production Economics, University of Vaasa " and "Modeling Semistructured Data by the Adjacency Model", Jari Töyli, Liceutiate Thesis, Faculty of Information Technology Department of Computer Science, University of VAASA 2002.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

## Claims

1. A method of generating a model of information stored at a plurality of disparate data sources in an information system, the information comprising at least some data common between two or more of the data sources said method comprising:
(i) for each data source, accessing at least one schema describing how data is stored at that data source, said schema comprising a vertex-edge graph where each vertex is a master vertex uniquely representing an entity of the information system; and
(ii) forming a static graph representing all the accessed schemas by adding declined vertices to the skeleton graph, declined vertices representing instances of the master vertices.

2. A method as claimed in claim 1 wherein the step of forming the skeleton graph comprises linking the master vertices using first edges which comprise labels indicating the presence of any joined information between master vertices.

3. A method as claimed in claim 1 or claim 2 wherein a plurality of declined vertices are linked to a given master node using second edges, each of those declined vertices being related to a different one of the disparate data sources.

4. A method as claimed in any preceding claim which further comprises, at the master and declined vertices, uniquely representing fields that can be retrieved from the data sources.

5. A method as claimed in claim 4 which further comprises using third edges to link field representations at master vertices to corresponding field representations at declined vertices.

6. A method as claimed in any preceding claim which further comprises representing the skeleton graph and or the static graph using XML.

7. A method as claimed in any preceding claim which further comprises creating a dynamic graph from the static graph in which at least some data from the information system is represented.

8. A method as claimed in claim 7 wherein said dynamic graph is formed using an adjacency model.

9. A model of information stored at a plurality of disparate data sources (12) in an information system (10), the information comprising at least some data common between two or more of the data sources (12), the model comprising a static graph (36) comprising: a vertex-edge graph having:
(i) a plurality of master vertices (111, 112) each uniquely representing an entity of the information system; and
(ii) a plurality of declined vertices (113-117) representing instances of the master vertices.

10. A model as claimed in claim 9 wherein the master vertices are linked using first edges (118) which comprise labels indicating the presence of any joined information between master vertices.

11. A model as claimed in claim 9 or claim 10 comprising a plurality of declined vertices, all linked to a particular master vertex using second edges (118), each of those declined vertices being related to a different one of the disparate data sources.

12. A model as claimed in claim 11 comprising field representations at the master and declined vertices, those field representations uniquely representing fields that can be retrieved from the data sources.

13. A model as claimed in claim 12 comprising third edges (110) linking field representations at master vertices to corresponding field representations at declined vertices.

14. A model as claimed in any of claims 9 to 1 3 comprising a dynamic graph.

15. A method of accessing information from an information system comprising a plurality of disparate data sources, the information comprising at least some data common between two or more of the data sources, said method comprising:
(i) accessing a model as claimed in any of claims 9 to 14; and
(ii) forming a query to access the information on the basis of the model.

16. A computer program comprising computer program code means adapted to perform all the steps of any of claims 1 to 8 and 1 5 when said program is run on a computer.

17. A computer program as claimed in claim 16 embodied on a computer readable medium.

18. An apparatus for generating a model of information stored at a plurality of disparate data sources (12) in an information system (10), the information comprising at least some data common between two or more of the data sources said apparatus comprising:
(i) means for accessing, for each data source, at least one schema (34) describing how data is stored at that data source, said schema comprising a vertex-edge graph where each vertex is a master vertex uniquely representing an entity of the information system; and
(ii) a processor arranged to form a static graph representing all the accessed schemas by adding declined vertices to the skeleton graph, declined vertices representing instances of the master vertices.
